# EUROPÄISCHE PATENTSCHRIFT

(11) **EP 3 746 692 B1**
(45) Veröffentlichungstag und Bekanntmachung des Hinweises auf die Patenterteilung: **07.07.2021**
(21) Anmeldenummer: 19702825.1
(22) Anmeldetag: 23.01.2019
(51) Int. Cl.: F16L 27/08, F16L 43/00, F16L 19/02, F16L 37/088, E03B 7/00, F24D 17/00

(54) **WASSERLEITUNG MIT ROHRFITTING**
WATER PIPE WITH PIPE FITTING
TUYAU D'EAU AVEC RACCORD DE TUYAU

(30) Priorität: 30.01.2018 DE 102018102020
(43) Veröffentlichungstag der Anmeldung: 09.12.2020
(73) Patentinhaber: Spiegel, Doris, 97464 Niederwerrn (DE); Spiegel, Herbert, 97464 Niederwerrn (DE)
(72) Erfinder: SPIEGEL, Herbert, 97464 Niederwerrn (DE)
(74) Vertreter: Gosdin, Carstensen & Partner Patentanwälte Partnerschaftgesellschaft mbB
(86) Internationale Anmeldenummer: PCT/EP2019/051602
(87) Internationale Veröffentlichungsnummer: WO 2019/149591

(56) Entgegenhaltungen:
- WO-A1-84/00594
- AU-B2- 507 055
- US-A- 2 354 416
- US-A- 6 114 631
- US-A1- 2005 145 727
- US-A1- 2008 261 428
- US-B1- 6 550 817

## Beschreibung

Die Erfindung betrifft eine Wasserleitung umfassend einen Rohrfitting, wobei der Rohrfitting einen Eintritt umfasst, an dem das Wasser in eine erste Richtung senkrecht zu einem kreisförmigen Eintrittsquerschnitt eintritt, und einen Austritt umfasst, an dem das Wasser in eine zweite Richtung senkrecht zu einem kreisförmigen Austrittsquerschnitt austritt, wobei die beiden Richtungen einen Winkel einschließen, wobei der Rohrfitting aus drei Teilen besteht, wobei jeweils zwei Teile an einer Kontaktstelle aneinander liegen, wobei jeweils zwei Teile an ihrer Kontaktstelle relativ zueinander um die Achse der Strömungsrichtung an der Kontaktstelle drehbar sind, um den Winkel zu verändern, und wobei die beiden Kontaktstellen in Strömungsrichtung voneinander beabstandet sind.

Einen Rohrfitting der gattungsgemäßen Art zeigt die WO 84/00594 A1. Ähnliche und andere Lösungen zeigen die US 2005/145727 A1**,** die US 2 354 416 A**,** die US 2008/261428 A1**,** die AU 507 055 B2**,** die US 6 550 817 B1 und die US 6 114 631 A**.**

Rohrfittings dieser Art sind ansonsten im Stand der Technik hinlänglich bekannt und werden zumeist als einteilige Elemente eingesetzt. Dabei wird zwischen dem Eintritt und dem Austritt ein gewünschter Winkel eingeschlossen, so dass das Medium, welches durch den Rohrfitting geleitet wird, entsprechend umgelenkt wird. Dies ist für verschiedenartige Anwendungen im Rohrleitungsbau, insbesondere bei Wasserleitungen, erforderlich.

Ein besonderes Problem ergibt sich, wenn innerhalb des Rohrfittings eine Zirkulationsleitung verlaufen soll, wie es einer bevorzugten Verwendung entspricht. Zur diesbezüglichen Technologie wird ausdrücklich auf die EP 2 606 285 B1 Bezug genommen, die diesen Einsatzfall beschreibt.

Auch hier ist die Verwendung eines Rohrfittings (auch als Winkel bezeichnet) in Bereich der Installationstechnik von Rohren bekannt. Die Rohrfittinge werden in der Regel in 90°- und 45°-Varianten hergestellt und verwendet. Dafür muss ein hoher Lagerbestand vorgehalten werden, um für jede gewünschte Richtungsänderung, d. h. jeden gewünschten Umlenkwinkel, für das Rohrsystem einen entsprechenden Rohrfitting bereitzuhalten.

Bei der Verbundrohrtechnik werden die Durchführungen der Winkel durch Bohrung hergestellt. Dies bedeutet nachteilig eine erhebliche Verringerung des inneren Durchmessers, was zu erheblichen Druckverlusten in der Anlage führt. Der Einsatz einer innenliegenden Zirkulation - wie im Zusammenhang mit der EP 2 606 285 B1 erläutert - ist bei diesem Rohrfitting nicht möglich.

Bei Standard-Fittingen ist das Einbringen einer innenliegenden Zirkulationsleitung nur eingeschränkt oder unter Verwendung von Hilfsmitteln möglich. Ein weiter Nachteil ist die Inflexibilität der Rohrfittinge in der Installations-technik.

Die DE 10 2009 025 490 A1 beschreibt eine Versorgungsleitung, wobei ein Leitungsabschnitt verschwenkbar in einem Gehäuseteil, vorliegend in Form einer Brennkraftmaschine, angeordnet ist, wozu am axialen Ende des Leitungsabschnitts ein O-ring-artiges Dichtungselement angeordnet ist, welches den Außenumfang des Leitungsabschnitts umfasst und in einer zylindrischen Bohrung des Gehäuses gleitend angeordnet ist.

Der vorliegenden Erfindung liegt die **Aufgabe** zugrunde, einen Rohrfitting der eingangs genannten Art so fortzubilden, dass insbesondere bei der Anordnung einer innenliegenden Zirkulationsleitung verbesserte Montageverhältnisse erreicht werden können. Ferner sollen die Strömungsverhältnisse durch den Fitting verbessert werden. Damit sollen insbesondere Anforderungen an die Hygiene verbessert werden. Demgemäß soll insbesondere bei einer innenliegenden Zirkulation auch eine einfache Montierbarkeit bei Rohrinstallationen mit Rohrfittingen gewährleistet werden. Weiterhin wird ein höherer Grad an Flexibilität in der Winkeltechnik bei Rohrsystemen angestrebt.

Die **Lösung** dieser Aufgabe durch die Erfindung ist dadurch gekennzeichnet, dass in dem Strömungsweg für das Wasser eine Zirkulationsleitung angeordnet ist, wobei die Teile so ausgebildet sind, dass sie in einer ersten Relativposition einen im wesentlichen geraden Verlauf des Fließwegs durch das Innere des Rohrfittings aufweisen und dass sie in einer zweiten Relativposition zwischen den beiden Richtungen einen Winkel ungleich Null einschließen.

Dabei ist bevorzugt vorgesehen, dass das zwischen zwei Teilen angeordnete Teil eine Umlenkung des Wassers um einen ersten Teilwinkel erzeugt, wobei die beiden an dieses Teil angrenzenden Teile jeweils eine Umlenkung des Wassers um einen zweiten Teilwinkel erzeugen, der unterschiedlich vom ersten Teilwinkel ist.

Der erste Teilwinkel beträgt dabei bevorzugt zwischen 40° und 50°, besonders bevorzugt 45°. Der zweite Teilwinkel beträgt bevorzugt zwischen 20° und 25°, besonders bevorzugt 22,5°.

Die beiden im axialen Endbereich des Rohrfittings angeordneten Teile sind in diesem Falle vorzugsweise identisch ausgebildet.

Zwei an einer Kontaktstelle aneinander liegende Teile können dabei durch formschlüssige Verbindungsmittel verbunden sein; hierbei ist insbesondere an eine Überwurfmutter gedacht, die auf ein entsprechendes Gewinde aufgeschraubt ist.

Es ist aber auch möglich, dass zwei an einer Kontaktstelle aneinander liegende Teile durch kraftschlüssige Verbindungsmittel miteinander verbunden sind. Hierbei ist insbesondere an eine Schnappverbindung gedacht, über die zwei Teile miteinander verbunden werden. Beim Einsatz einer solchen Schnappverbindung zur Befestigung zweier aneinander grenzender Teile des Rohrfittings kann ein Sprengring zum Einsatz kommen, der in eine nutförmige Vertiefung einrastet und so für die Verbindung der beiden Teile sorgt.

Der im axialen Endbereich des Rohrfittings liegende Abschnitt des Teils ist bevorzugt zur Verbindung mit einem Verbundrohr oder zum Anschluss eines Rohrs mittels einer Schraubverbindung ausgebildet. Demgemäß kann also zum Anschluss eines Rohrs bzw. einer Leitung an den Rohrfitting eine Verschraubung eingesetzt werden, allerdings auch die Anbindung eines Verbundrohrs.

Die Erfindung sieht auch vor, dass in dem Strömungsweg für das Wasser eine Zirkulationsleitung angeordnet ist. Diese besonders bevorzugte Verwendung des beschriebenen Rohrfittings kommt sehr vorteilhaft zur Anwendung, wenn eine Lösung gemäß der oben bereits genannten EP 2 606 285 B1 eingesetzt wird, auf die insofern auch an dieser Stelle noch einmal ausdrücklich Bezug genommen wird.

Der vorgeschlagene Rohrfitting, der als Rohrverbindung fungiert, eignet sich für flüssige, gasförmige oder feste Medien, wobei insbesondere auch der Einsatz innenliegender Leitungen möglich ist. Durch die vorgeschlagene Bauweise wird auch nach dem Einbau bzw. der Montage eine variable Richtungsveränderungen ermöglicht, d. h. eine Veränderung des Winkels zwischen dem Eintritt und dem Austritt.

Erfindungsgemäß weist der Rohrfitting drei Teile auf, nämlich ein Zwischenteil und zwei endseitige Verbindungsteile, die sich beiderseits des Zwischenteils befinden. Die einzelnen Teile haben geeignete Verbindungselemente, um miteinander verbunden werden zu können und auch sich anschließende Rohrleitungen dicht anfügen zu können; dies kann durch Verschraubungen (über Gewinde), durch ein Verpressen (Presshalterungsnuten) oder ein Stecken (Steckhalterung) der Einzelteile, gegebenenfalls mit erforderlichen Abdichtungen, erfolgen. Generell möglich ist auch eine Verschweißung oder eine Verklebung zur entsprechenden Anbindung.

Die erfindungsgemäße Ausgestaltung des vorgeschlagenen Rohrfittings sieht also, wie beschrieben, drei Teile vor. Das in der Mitte angeordnete Teil sowie die beiden endseitig angeordneten Außenteile bilden den Rohrfitting, wobei die beiden endseitigen Teile bevorzugt identisch ausgeführt sind. Sollen unterschiedliche Rohrsysteme zum Einsatz kommen, brauchen nur die beiden Außenteile angepasst zu werden. Das sich in der Mitte befindliche Teil kann zumeist stets unverändert eingesetzt werden.

Die Verbindung der einzelnen Teile kann durch Verpressen, Verschrauben oder durch eine Steck- oder Schnappverbindung erfolgen. Das Verschrauben als lösbare Verbindung ist gelegentlich bevorzugt.

Das sich in der Mitte befindliche Teil weist Dichtflächen auf sowie Gewinde (vorzugsweise Außengewinde) für das Einschrauben von Überwurfmuttern (Gegenmuttern). Die zum Einsatz kommenden Dichtflächen können je nach Anwendung flachdichtend, metallisch, mit Hartdichtungen, Rollringen oder in sonstiger Weise ausgebildet sein.

Die beiden endseitigen Außenteile des Rohrfittings besitzen vorzugsweise ebenfalls eine Dichtfläche, die je nach Anwendung passend zum Zwischenteil ausgebildet sind. Durch unterschiedliche Ausführung der Außenteile können beliebige Rohrsysteme verwenden werden, auch beispielsweise in Kombination unterschiedlicher Systeme, z. B. ein endseitiges Außenteil für ein Gewinde, das andere endseitige Außenteil für ein Verbundrohr.

Durch die Drehlage des in der Mitte angeordneten Teils relativ zu den endseitigen Teilen können die unterschiedlichsten Winkeleinstellungen des Rohrfittings eingenommen werden. Eine bevorzugte Ausführungsform sieht diesbezüglich vor, dass das sich in der Mitte befindliche Zwischenteil eine Umlenkung um 45° aufweist und die endseitigen Außenteile jeweils 22,5° Umlenkung aufweisen. Dadurch sind die zumeist angestrebten Normwinkelgrößen für den Rohrfitting von 45° und von 90° problemlos realisierbar, und zwar ohne Einschränkung des inneren Durchmessers. In dieser Stellung sind vorteilhaft auch keine Stagnationsräume vorhanden, so dass ein hygienischer Einsatz gewährleistet ist.

Die Druckverluste bei herkömmlichen Rohrfittingen insbesondere für Verbundrohrsysteme sind durch die Verengungen im Inneren derselben erheblich. Dieses Problem kann mit der vorgeschlagenen Lösung nachhaltig beseitigt werden. Dies gilt hinsichtlich des gesamten eingestellten Winkelbereichs, auf den die erfindungsgemäßen Rohrfittinge eingestellt werden.

Durch Veränderung der relativen Drehlage zweier benachbarter Teile des Rohrfittings kann jede beliebige Winkelgröße innerhalb gewisser Grenzen flexibel eingestellt werden. Dies gilt insbesondere auch für den Fall, dass eine Einstellung gewählt wird, bei der der Winkel zwischen dem Eintritt und dem Austritt Null Grad beträgt. Demgemäß ist vorzugsweise ein einstellbarer Winkelbereich zwischen 0° und 90° gegeben.

Wesentliche Vorteile werden auch erzielt, wenn eine innenliegende Zirkulationsleitung in der Leitung und insbesondere im Rohrfitting verlegt werden soll. Hinsichtlich dieser Anwendung wird ausdrücklich auf die EP 2 606 285 B1 Bezug genommen. Hier ist es zunächst bei Wahl einer Grundeinstellung (im wesentlichen gerader Verlauf des Rohrfittings) möglich, die innenliegende Zirkulationsleitung problemlos durch den Rohrfitting zu schieben; dies gilt auch bei mehreren hintereinander eingebauten Fittingen. Eine Verstellung in die gewünschte Winkelposition des Fittings (z. B. 45° oder 90°) erfolgt dann erst zu einem späteren Zeitpunkt, wenn nämlich die innenliegende Zirkulationsleitung verlegt ist.

Auch in der Speichertechnik bringt der vorgeschlagene Rohrfitting Vorteile, z. B. beim Einsatz von Speicherschwerten aus Kunststoff oder Edelstahlwellrohr. Der Einbau konnte bislang nur über ein gerades Bauteil erfolgen, was mit erheblichem Platzbedarf bei der Installation einhergeht (z. B. mit Blick auf Sicherheitseinrichtungen, Pumpen usw.). Mit dem vorgeschlagenen Rohrfitting kann die Montage des Zirkulationsschwertes wesentlich einfacher durchgeführt werden. Denn erst nach der Montage wird dann wieder die Verstellung in die gewünschte bzw. richtige Winkelposition vorgenommen.

Bei Systemen mit innenliegenden Rohrleitungen (Zirkulationsleitungen) ist es mitunter schwierig, die Leitung aus den Rohrsystemen herauszuführen. Dabei ist es unter strömungstechnischen und hygienischen Aspekten bevorzugt, einen Rohrfitting mit einem Abgang in Form eines spitzen Winkels zum Herausführen des innenliegenden Rohres zu verwenden. Der an ein solches Bauteil angeschlossene vorgeschlagene Rohrfitting ermöglicht ein unkompliziertes Verbinden mit nach- bzw. vorgeschalten Bauteilen (z. B. einer Pumpe, einem Verbrühschutz, usw.).

Ein weiterer Vorteil des vorgeschlagenen Rohrfittings ist dann gegeben, wenn das Zwischenteil (mittleres Teil bei einer dreiteiligen Ausgestaltung des Fittings) und die beiden Außenteile in einer Steckausführung hergestellt werden. Die (Überwurf-)Muttern für die Fixierung können dann entfallen, ein Werkzeug zum Verschrauben oder zum Verpressen wird dann nicht benötigt. Somit wird bei Einsatz des vorgeschlagenen Rohrfittings die Flexibilität in der Installations-Technik erheblich größer. Eine eventuelle Abdichtung kann mit integrierten Dichtungen erfolgen. Der Materialbedarf bei dieser Variante wird erheblich verringert, so dass Ressourcen geschont werden können. Die Steckverbindungen können in einer nicht lösbaren oder lösbaren Verbindungsvariante ausgeführt werden.

Alle genannten Ausgestaltungen des vorgeschlagenen Rohrfittings bieten den Vorteil einer hohen Flexibilität; bei den verschiedenen Ausführungen der Teile können alle bekannten Rohrsysteme verwendet werden. Auch eine Kombination unterschiedlicher Systemen untereinander ist möglich.

Die verschiedenen Kombinations-Möglichkeiten sind auch bei einer Ausführung als gerade Variante von Vorteil, bei der die Teile ohne winkelige Ausgestaltung ausgeführt sind.

Das Material für den Rohrfitting wird je nach Anwendungsgebiet fachmännisch gewählt und angepasst.

Während der vorgeschlagene Rohrfitting vor allem für Wasserleitungen zum Einsatz kommt, ist genauso generell auch der Einsatz bei Hydrauliksystemen allgemeiner Art möglich.

Die einzelnen Teile des Rohrfittings sind dabei bevorzugt in derselben Dimensionierung ausgeführt; es ist allerdings auch möglich, dass unterschiedliche Dimensionierung für die einzelnen Teile zum Einsatz kommen (z. B. 1 Zoll / 3/4 Zoll).

In vorteilhafter Weise ergibt sich im Inneren des Rohrfittings keine Einschnürung bzw. Verengung, was insbesondere unter hygienischen Gesichtspunkten in Wasserleitungen vorteilhaft ist.

In der Zeichnung sind Ausführungsbeispiele der Erfindung dargestellt. Es zeigen:
- Fig. 1: in einer geschnittenen Seitenansicht einen Rohrfitting, der aus drei Teilen besteht und in einer ersten Relativlage der einzelnen Teile montiert ist,
- Fig. 2: in der Ansicht gemäß Figur 1 den Rohrfitting, der nunmehr in einer zweiten Relativlage der einzelnen Teile montiert ist,
- Fig. 3: in der Ansicht gemäß Figur 1 den Rohrfitting, der nunmehr in einer dritten Relativlage der einzelnen Teile montiert ist,
- Fig. 4: die Einzelheit "Z" gemäß Figur 3,
- Fig. 5: in einer geschnittenen Seitenansicht den Rohrfitting gemäß einer alternativen Ausgestaltung, wobei sich die einzelnen Teile in einer Lage analog zu Figur 1 befinden und wobei in den Rohrfitting eine Zirkulationsleitung eingeschoben ist,
- Fig. 6: den Rohrfitting gemäß Figur 5 (jetzt allerdings ohne Zirkulationsleitung), wobei er nun in eine Lage analog zu Figur 2 gebracht ist,
- Fig. 7: den Rohrfitting gemäß Figur 5 (wiederum ohne Zirkulationsleitung), wobei er nun in eine Lage analog zu Figur 3 gebracht ist,
- Fig. 8: in einer geschnittenen Seitenansicht einen alternativ gestalteten Rohrfitting, der aus drei Teilen besteht und in einer ersten Relativlage der einzelnen Teile montiert ist,
- Fig. 9: in der Ansicht gemäß Figur 8 den Rohrfitting, der nunmehr in einer zweiten Relativlage der einzelnen Teile montiert ist,
- Fig. 10: in der Ansicht gemäß Figur 8 den Rohrfitting, der nunmehr in einer dritten Relativlage der einzelnen Teile montiert ist,
- Fig. 11: in einer geschnittenen Seitenansicht den Rohrfitting gemäß Figur 8, in den eine Zirkulationsleitung eingeschoben ist, wobei ein Zustand vor Abschluss der Montage dargestellt ist,
- Fig. 12: in der Darstellung gemäß Figur 11 den Rohrfitting samt Zirkulationsleitung, wobei der Zustand nach Abschluss der Montage dargestellt ist,
- Fig. 13: eine Ausführungsform des erfindungsgemäßen Rohrfittings, der an ein T-Stück einer Wasserleitung montiert ist,
- Fig. 14: schematisch in der Seitenansicht eine andere, nicht erfindungsgemäße Ausführungsform des Rohrfittings, der hier aus zwei Teilen besteht, und zwar in einer ersten Relativlage der beiden Teile und
- Fig. 15: den Rohrfitting gemäß Figur 14 in einer zweiten Relativlage der beiden Teile.

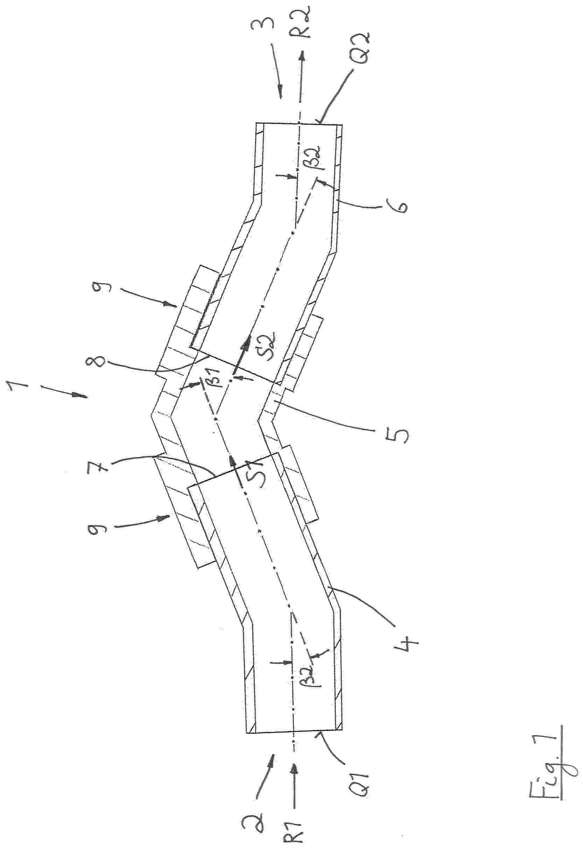

In Figur 1 ist ein Rohrfitting 1 beispielsweise zur Durchleitung von Trinkwasser dargestellt, der einen Eintritt 2 und einen Austritt 3 aufweist.

Der Eintritt 2 hat einen Eintrittsquerschnitt Q1, zu dem sich, senkrecht stehend, eine erste Richtung R1 ergibt, in die das zu fördernde Medium in den Rohrfitting eintritt.

Analog weist der Austritt 3 einen Austrittsquerschnitt Q2 auf, zu dem sich wiederum, senkrecht stehend, eine zweite Richtung R2 ergibt, in die das zu fördernde Medium aus dem Rohrfitting austritt.

Der Rohrfitting 1 besteht dabei aus drei Teilen 4, 5 und 6, nämlich aus einem zentral angeordneten Teil 5, an welches sich jeweils ein endseitiges Teil 4 bzw. 6 anschließt. Zwei aneinander angrenzende Teile kontaktieren sich an einer Kontaktstelle 7 bzw. 8. Wie sich aus Figur 1 ergibt, ist hierbei unter einer Kontaktstelle 7 bzw. 8 dasjenige axial endseitige Ende eines Teils 4 bzw. 6 zu verstehen, mit dem dieses im Teil 5 sitzt.

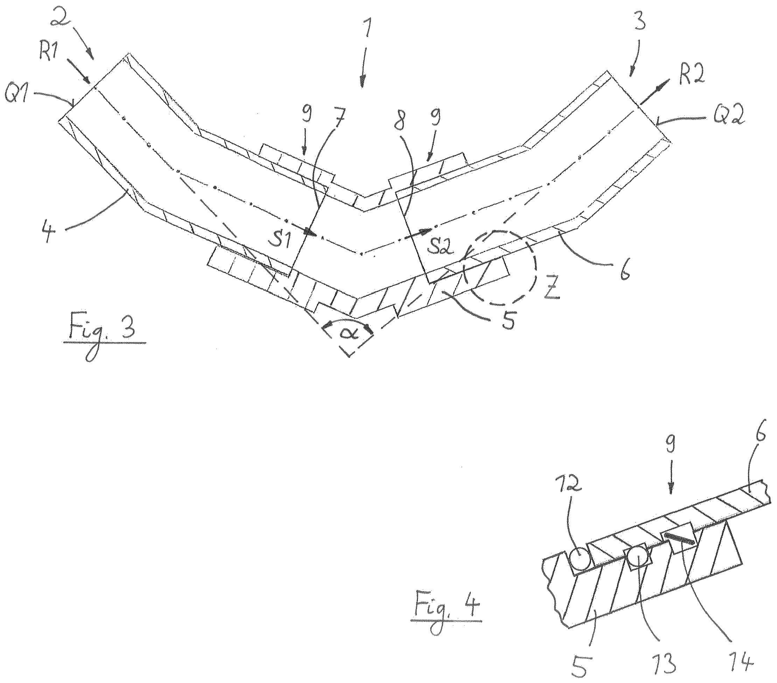

Zur Verbindung zweier aneinander angrenzender Teile sind Verbindungsmittel 9 vorhanden, die nachfolgend in Figur 4 näher beschrieben werden.

Zwei aneinander angrenzende Teile 4 und 5 bzw. 5 und 6 können dabei relativ zueinander im Bereich der Kontaktstelle 7 bzw. 8 verdreht werden; die Drehachse wird folglich durch die an der Kontaktstelle 7 bzw. 8 vorliegende Strömungsrichtung S1 bzw. S2 definiert.

Somit können verschiedene Relativstellungen der Teile eingenommen werden, was in den Figuren 1, 2 und 3 illustriert ist.

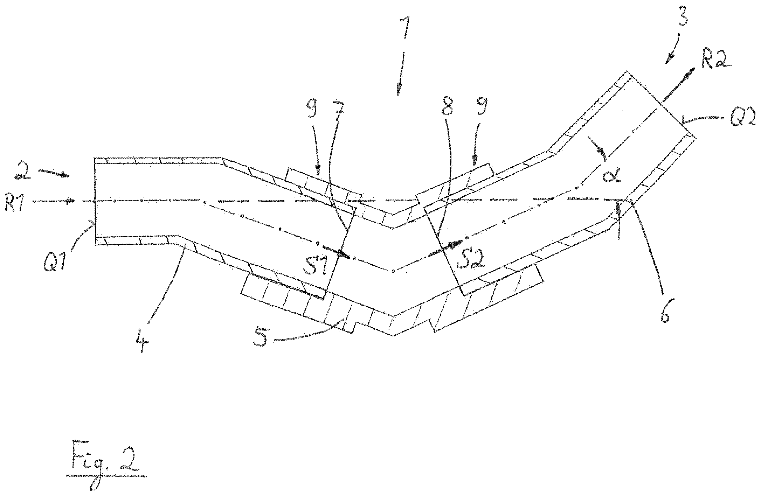

Zur diesbezüglichen Illustration ist ein Winkel α in die Figuren 2 und 3 eingetragen, der sich aus der Lage der ersten und zweiten Richtung R1 und R2 ergibt. In Figur 1 ist dieser Winkel α 0°, d. h. die Richtungen R1 und R2 sind identisch.

Indes sind die aneinander angrenzende Teile 4 und 5 bzw. 5 und 6 bei der Konstellation gemäß der Figuren 2 und 3 so positioniert worden, dass sich im Falle von Figur 2 ein Winkel α von 45° ergibt, während sich im Falle von Figur 3 ein Winkel α von 90° ergibt.

Damit die genannten verschiedenen Einstellungsmöglichkeiten gegeben sind, weisen sowohl das zentrale Teil 5 als auch die beiden identisch ausgeführten endseitigen Teile 4 und 6 einen ersten Teilwinkel β1 und einen zweiten Teilwinkel β2 auf, wie sie in Figur 1 eingetragen sind. Im Ausführungsbeispiel beträgt für das zentrale Teil 5 des Rohrfittings 1 der Teilwinkel β1 45°, während die beiden endseitigen Teile 4 und 6 jeweils einen Teilwinkel β2 von 22,5° aufweisen. Besagte Teilwinkel geben also an, um welchen Winkel das geförderte Medium umgelenkt wird, wenn es die in Rede stehenden Teile 4, 5 und 6 durchströmt.

Wie sich aus der Zusammenschau der Figuren 1 bis 3 also ergibt, kann durch die vorgeschlagene Ausgestaltung in sehr einfacher Weise der Winkel α, der insgesamt die Umlenkung des geförderten Mediums durch den gesamten Rohrfitting 1 angibt, in sehr einfacher Weise variiert und eingestellt werden.

In Figur 4 ist eine Möglichkeit der Ausgestaltung der Verbindungsmittel 9 dargestellt. Hiernach ist vorgesehen, dass sich im Teil 5 eine Ringnut befindet, in die ein Halteelement 14 eingesetzt ist; das Halteelement kann dabei nach Art einer Haltefeder, einer Kantung oder eines Sprengrings ausgebildet sein. Im Teil (4 bzw.) 6 ist eine korrespondierende Ringnut eingearbeitet, in die das Halteelement 14 eingreifen kann, wenn die beiden Teile 4 und 5 bzw. 6 und 5 ineinander gesteckt und zusammengeschoben sind. Zur Sicherstellung der Dichtigkeit sind Dichtungen 12 und 13 vorgesehen; diese können als O-Ring ausgebildet sein. Somit kann in einer einfachen Weise beispielsweise eine Schnappverbindung realisiert werden, mit denen zwei aneinander grenzende Teile 4 und 5 bzw. 5 und 6 zuverlässig und dicht miteinander verbunden werden können.

Dabei ist die Positionierung der Dichtungen 12 und 13 bzw. des Halteelements 14 in beliebiger Weise in den zusammenwirkenden und zu verbindenden Teilen 4 und 5 bzw. 5 und 6 möglich. Bevorzugt ist eine Anordnung im mittleren Teil 5. Bei einer Anordnung im mittleren Teil 5 ergeben sich Vorteile, beispielsweise der Schutz vor direktem Verschleiß oder vor Zerstörung durch äußere Einwirkungen auf die Dichtungen bzw. auf das Halteelement. Auch ist in diesem Falle der Materialbedarf geringer.

Das Halteelement 14 kann als lösbare Verbindung (beispielsweise mit Federn) oder auch als nicht lösbare Verbindung ausgebildet sein.

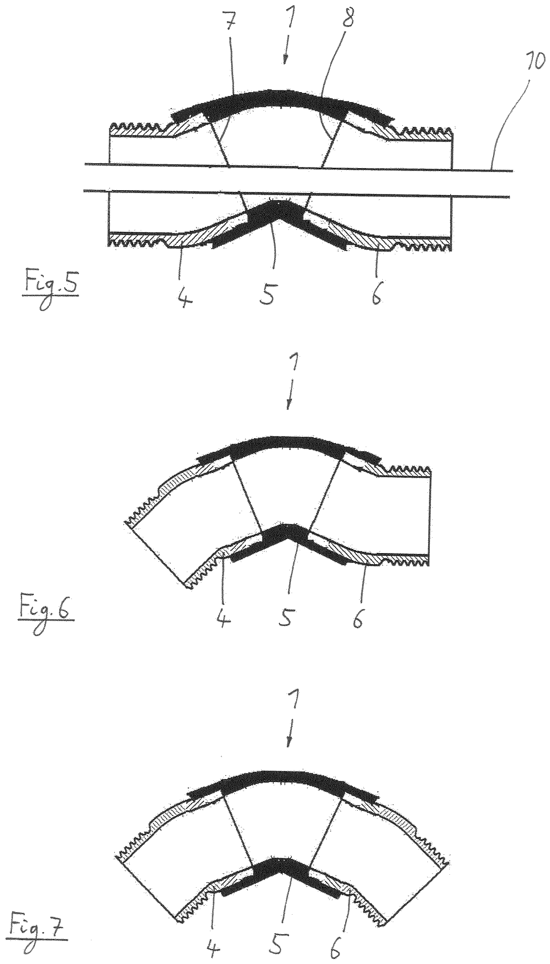

Die vorgeschlagene Ausgestaltung des Rohrfittings 1 macht sich besonders dann vorteilhaft bemerkbar, wenn ins Innere des Rohrfittings 1 eine Zirkulationsleitung 10 montiert werden soll, wie es in Figur 5 angedeutet ist. Der Unterschied zum Rohrfitting 1 gemäß den Figuren 1 bis 3 besteht hier im wesentlichen darin, dass die vom Mittelteil 5 abgewandten Enden der beiden Teile 4 und 6 mit Gewinden versehen sind, die zum Anschluss entsprechender Leitungen mittels einer Schraubverbindung dienen.

Ansonsten zeigt Figur 5, wie die Zirkulationsleitung 10 in einer Position der Teile 4, 5 und 6 eingeschoben wurde, wo die beiden Richtungen R1 und R2 (s. Figur 1) noch keinen Winkel einschließen und demgemäß das Einführen der Zirkulationsleitung 10 problemlos möglich ist. Anschließend können die einzelnen Teile 4, 5, 6 des Rohrfittings 1 in die Positionen verdreht werden, wie sie in den Figuren 6 und 7 dargestellt sind, wodurch die Zirkulationsleitung (die in den Figuren 6 und 7 nicht dargestellt ist) dem Verlauf des Rohrfittings 1 folgt.

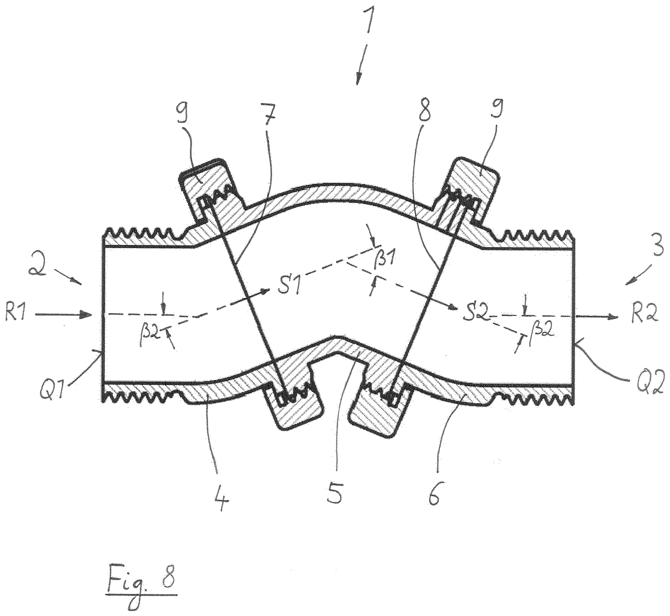

In Figur 8 ist ein Rohrfitting 1 gemäß einer alternativen Ausgestaltung dargestellt. Der generelle Aufbau entspricht der vorgeschriebenen Lösung.

Wieder besteht hier der Rohrfitting 1 aus den drei Teilen 4, 5 und 6. Zwei aneinander angrenzende Teile kontaktieren sich wieder an einer Kontaktstelle 7 bzw. 8. Zur Verbindung zweier aneinander angrenzender Teile sind auch hier wiederum Verbindungsmittel 9 vorhanden, die hier allerdings durch eine Überwurfmutter gebildet werden, die mit einem entsprechenden Gewinde zusammenwirkt.

Zwei aneinander angrenzende Teile 4 und 5 bzw. 5 und 6 können dabei relativ zueinander im Bereich der Kontaktstelle 7 bzw. 8 verdreht werden; die Drehachse wird wieder durch die an der Kontaktstelle 7 bzw. 8 vorliegende Strömungsrichtung S1 bzw. S2 definiert. Besagte relative Verdrehung ist dabei möglich, solange die Verbindungsmittel 9 noch nicht wirksam sind (d. h. solange im Ausführungsbeispiel die Überwurfmutter noch nicht angezogen ist).

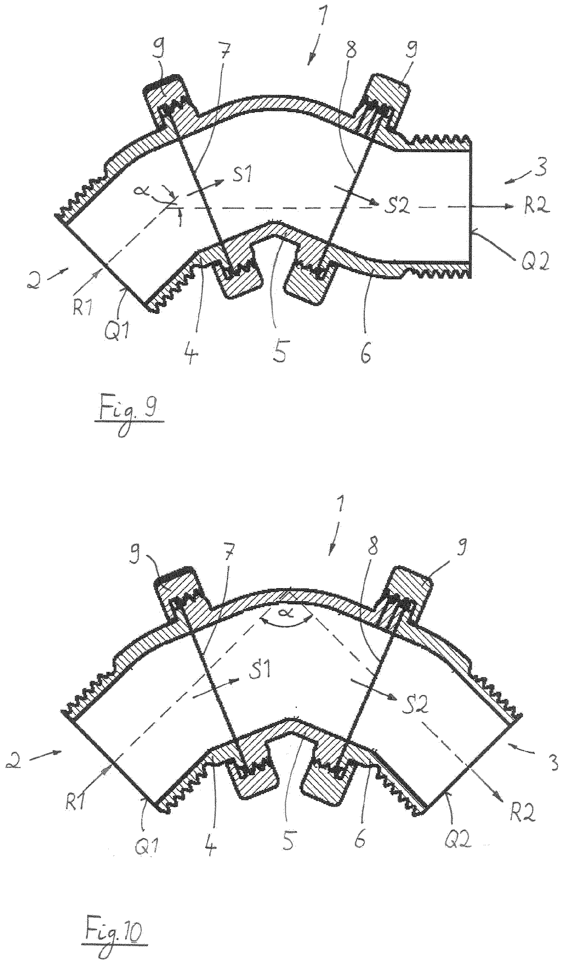

Solange besagte relative Verdrehung der Teile 4 und 5 bzw. 5 und 6 noch möglich ist, können verschiedene Relativstellungen der Teile eingenommen werden, was in den Figuren 8, 9 und 10 illustriert ist.

Bezüglich der Winkelverhältnisse gilt Analoges, wie es im Zusammenhang mit den Figuren 1 bis 3 erläutert wurde.

Wie sich aus der Zusammenschau der Figuren 8 bis 10 also ergibt, kann durch die vorgeschlagene Ausgestaltung wiederum in sehr einfacher Weise der Winkel α, der insgesamt die Umlenkung des geförderten Mediums durch den gesamten Rohrfitting 1 angibt, in sehr einfacher Weise variiert und eingestellt werden.

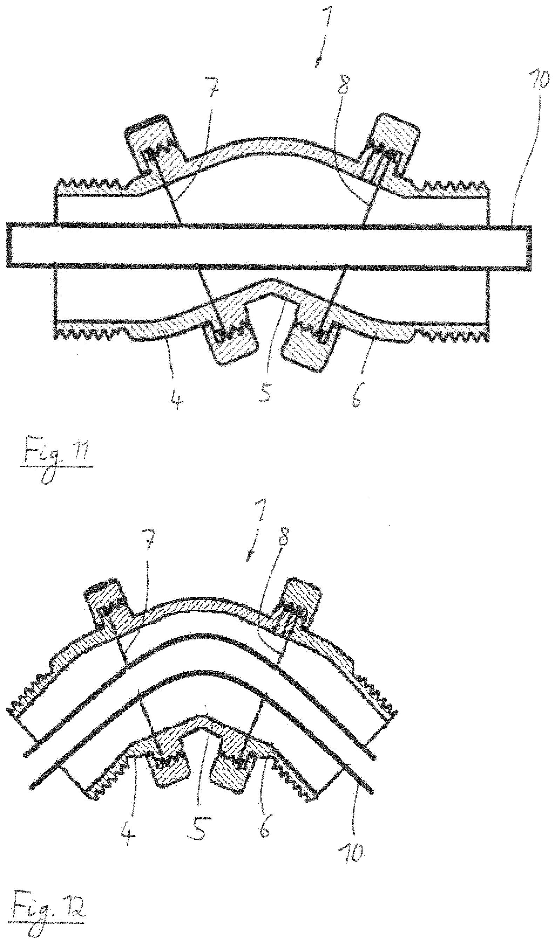

Dies macht sich auch hier wieder in besonderer Weise vorteilhaft bemerkbar, wenn ins Innere des Rohrfittings 1 eine Zirkulationsleitung 10 montiert werden soll, wie es in den Figuren 11 und 12 illustriert ist. Unter nochmaligem Verweis auf die EP 2 606 285 B1 ist das Einbringen der Zirkulationsleitung 10 dann problematisch, wenn dies bei einem klassischen Rohrfitting erfolgen soll, zumal die Zirkulationsleitung 10 zumeist aus einem relativ steifen Kunststoffrohr besteht.

Wird indes zunächst die Position des vorgeschlagenen Rohrfittings 1 (bei noch nicht angezogenen Überwurfmuttern) eingestellt, wie sie in Figur 11 zu sehen ist, kann die Zirkulationsleitung 10 problemlos durch den Rohrfitting eingeschoben werden, da sich hier ein im wesentlichen gerader Verlauf des Fließweg durch das Innere des Rohrfittings ergibt. Ist die Zirkulationsleitung 10 eingeschoben, werden die Teile 4 und 5 bzw. 5 und 6 relativ zueinander in die gewünschte Position verdreht, wie es Figur 12 zeigt. Nunmehr werden bei gegebener Umlenkung (um den Winkel α) die Überwurfmuttern fest gezogen, so dass die Anordnung nach Figur 12 gegeben ist.

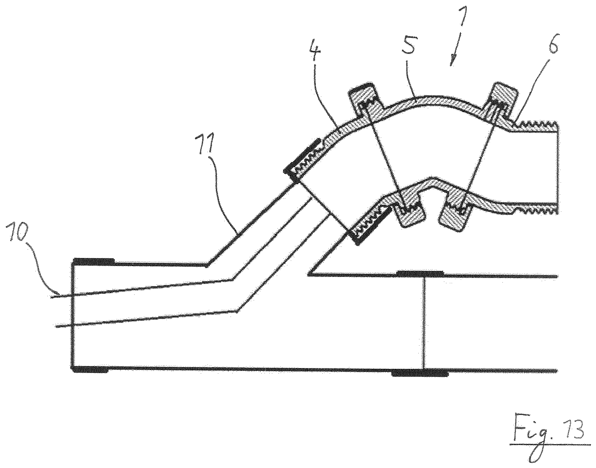

Figur 13 zeigt eine Anwendung, bei der der Rohrfitting 1 an ein T-Stück 11 angeschlossen wurde. Wiederum ist hier eine Zirkulationsleitung 10 vorgesehen, die problemlos in der genannten Weise (analog zur Darstellung nach den Figuren 11 und 12) in den Rohrfitting 1 eingebracht werden kann.

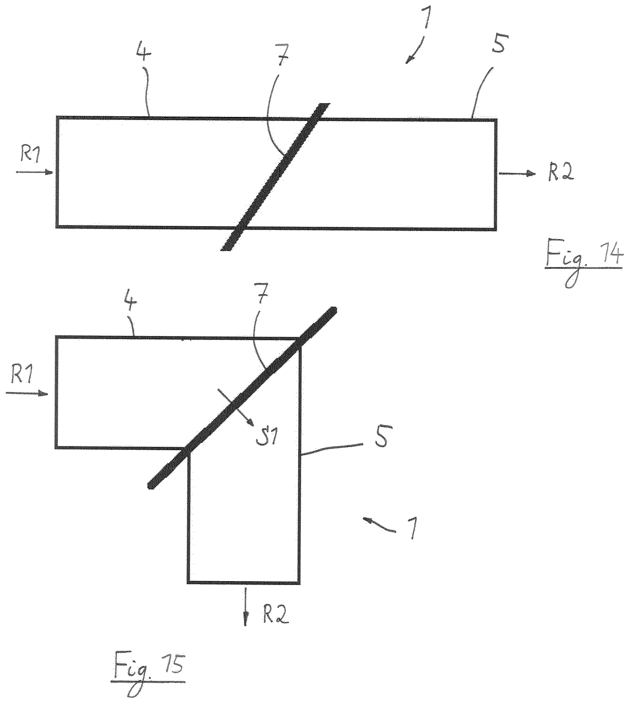

Das vorgeschlagene Prinzip der Ausgestaltung eines Rohrfittings lässt sich noch vereinfachen, wie es in den Figuren 14 und 15 dargestellt ist. Hier ist die einfachste Möglichkeit der Ausgestaltung eines nicht erfindungsgemäßen Rohrfittings skizziert. Der Rohrfitting 1 besteht aus zwei Teilen 4 und 5, die relativ zueinander verdreht werden können.

Hierzu zeigt Figur 14 eine Situation, wo zwischen der ersten Richtung R1 und der zweiten Richtung R2 ein Winkel von Null Grad eingeschlossen ist, während in Figur 15 eine Umlenkung um 90° erfolgt.

Somit besteht in diesem einfachsten Fall der Rohrfitting aus den beiden Teilen 4 und 5, was eine einfache Verstellung in einem 90°-Winkel ermöglicht. In anderen Positionen liegen Kanten und Stagnationsbereiche vor; der innere freie Durchmesser wird hier eingeschränkt. Dies erfordert es, dass die Abdichtung und die Verbindungsteile entsprechend größer sein müssen.

### Bezugszeichenliste:

- 1: Rohrfitting
- 2: Eintritt
- 3: Austritt
- 4: Teil des Rohrfittings
- 5: Teil des Rohrfittings
- 6: Teil des Rohrfittings
- 7: Kontaktstelle
- 8: Kontaktstelle
- 9: Verbindungsmittel
- 10: Zirkulationsleitung
- 11: T-Stück
- 12: Dichtung (O-Ring)
- 13: Dichtung (O-Ring)
- 14: Halteelement (Haltefeder / Kantung / Sprengring)

- R1: erste Richtung
- R2: zweite Richtung

- Q1: Eintrittsquerschnitt
- Q2: Austrittsquerschnitt

- S1: Strömungsrichtung
- S2: Strömungsrichtung
- α: Winkel
- β1: erster Teilwinkel
- β2: zweiter Teilwinkel

## Patentansprüche

1. Wasserleitung umfassend einen Rohrfitting (1) zur Durchleitung von Wasser, wobei der Rohrfitting (1)
einen Eintritt (2) umfasst, an dem das Wasser in eine erste Richtung (R1) senkrecht zu einem Eintrittsquerschnitt (Ql) eintritt, und einen Austritt (3) umfasst, an dem das Wasser in eine zweite Richtung (R2) senkrecht zu einem Austrittsquerschnitt (Q2) austritt, wobei die beiden Richtungen (R1, R2) einen Winkel (α) einschließen, wobei der Rohrfitting (1) aus drei Teilen (4, 5, 6) besteht, wobei jeweils zwei Teile (4, 5, 6) an einer Kontaktstelle (7, 8) aneinander liegen, wobei jeweils zwei Teile (4, 5, 6) an ihrer Kontaktstelle (7, 8) relativ zueinander um die Achse der Strömungsrichtung (S1, S2) an der Kontaktstelle (7, 8) drehbar sind, um den Winkel (α) zu verändern, und wobei die beiden Kontaktstellen (7, 8) in Strömungsrichtung voneinander beabstandet sind,
**dadurch gekennzeichnet,**
**dass** in dem Strömungsweg für das Wasser eine Zirkulationsleitung (10) angeordnet ist, wobei die Teile (4, 5, 6) so ausgebildet sind, dass sie in einer ersten Relativposition einen im wesentlichen geraden Verlauf des Fließwegs durch das Innere des Rohrfittings (1) aufweisen und dass sie in einer zweiten Relativposition zwischen den beiden Richtungen (R1, R2) einen Winkel (α) ungleich Null einschließen.

2. Wasserleitung nach Anspruch 1, **dadurch gekennzeichnet, dass** das zwischen zwei Teilen (4, 6) angeordnete Teil (5) eine Umlenkung des Wasser um einen ersten Teilwinkel (β1) erzeugt, wobei die beiden an dieses Teil (5) angrenzenden Teile (4, 6) jeweils eine Umlenkung des Wassers um einen zweiten Teilwinkel (β2) erzeugen, der unterschiedlich vom ersten Teilwinkel (β1) ist.

3. Wasserleitung nach Anspruch 2, **dadurch gekennzeichnet, dass** der erste Teilwinkel (β1) zwischen 40° und 50° beträgt, vorzugsweise 45°.

4. Wasserleitung nach Anspruch 2 oder 3, **dadurch gekennzeichnet, dass** der zweite Teilwinkel (β2) zwischen 20° und 25° beträgt, vorzugsweise 22,5°.

5. Wasserleitung nach einem der Ansprüche 2 bis 4, **dadurch gekennzeichnet, dass** die beiden im axialen Endbereich des Rohrfittings (1) angeordneten Teile (4, 6) identisch ausgebildet sind.

6. Wasserleitung nach einem der Ansprüche 1 bis 5, **dadurch gekennzeichnet, dass** zwei an einer Kontaktstelle (7, 8) aneinander liegende Teile (4, 5, 6) durch formschlüssige Verbindungsmittel (9) miteinander verbunden sind.

7. Wasserleitung nach einem der Ansprüche 1 bis 5, **dadurch gekennzeichnet, dass** zwei an einer Kontaktstelle (7, 8) aneinander liegende Teile (4, 5, 6) durch kraftschlüssige Verbindungsmittel miteinander verbunden sind.

8. Wasserleitung nach einem der Ansprüche 1 bis 7, **dadurch gekennzeichnet, dass** der im axialen Endbereich des Rohrfittings (1) liegende Abschnitt des Teils (4, 6) zur Verbindung mit einem Verbundrohr oder zum Anschluss eines Rohrs mittels einer Schraubverbindung ausgebildet ist.

## Claims

1. Water pipe comprising a pipe fitting (1) for conveying water, wherein the pipe fitting (1) comprises an inlet (2) at which the water enters in a first direction (R1) perpendicular to an inlet cross section (Q1), and an outlet (3) at which the water leaves in a second direction (R2) perpendicular to an outlet cross section (Q2), wherein the two directions (R1, R2) enclose an angle (α), wherein the pipe fitting (1) consists of three parts (4, 5, 6), wherein in each case two parts (4, 5, 6) bearing against one another at a contact point (7, 8), wherein in each case two parts (4, 5, 6) at their contact point (7, 8) being rotatable relative to one another about the axis of the flow direction (S1, S2) at the contact point (7, 8) in order to change the angle (α), and wherein the two contact points (7, 8) being spaced apart from one another in the flow direction, **characterized in**
**that** a circulation pipe (10) is arranged in the flow path for the water, wherein the parts (4, 5, 6) being designed such that, in a first relative position, they have an essentially straight course of the flow path through the interior of the pipe fitting (1) and such that, in a second relative position, they form a non-zero angle (α) between the two directions (R1, R2).

2. Water pipe according to claim 1, **characterised in that** the part (5) arranged between two parts (4, 6) produces a deflection of the water by a first partial angle (β1), wherein the two parts (4, 6) adjacent to this part (5) each produce a deflection of the water by a second partial angle (β2) which is different from the first partial angle (β1).

3. Water pipe according to claim 2, **characterized in that** the first partial angle (β1) is between 40° and 50°, preferably 45°.

4. Water pipe according to claim 2 or 3, **characterized in that** the second partial angle (β2) is between 20° and 25°, preferably 22.5°.

5. Water pipe according to one of claims 2 to 4, **characterised in that** the two parts (4, 6) arranged in the axial end region of the pipe fitting (1) are formed identically.

6. Water pipe according to one of claims 1 to 5, **characterised in that** two parts (4, 5, 6) lying against one another at a contact point (7, 8) are connected to one another by positive-locking connecting means (9).

7. Water pipe according to one of claims 1 to 5, **characterised in that** two parts (4, 5, 6) lying against one another at a contact point (7, 8) are connected to one another by non-positive connecting means.

8. Water pipe according to one of claims 1 to 7, **characterised in that** the portion of the part (4, 6) lying in the axial end region of the pipe fitting (1) is designed for connection to a composite pipe or for connecting a pipe by means of a screw connection.

## Revendications

1. Conduite d'eau comprenant un raccord de tuyau (1) pour le passage d'eau, le raccord de tuyau (1) comportant une entrée (2), au niveau de laquelle l'eau entre dans une première direction (R1) perpendiculaire à une section transversale d'entrée (Q1), et comporte une sortie (3), au niveau de laquelle l'eau sort dans une deuxième direction (R2) perpendiculaire à une section transversale de sortie (Q2), les deux directions (R1, R2) formant un angle (α), le raccord de tuyau (1) étant constitué de trois parties (4, 5, 6), deux parties (4, 5, 6) étant respectivement juxtaposées au niveau d'un emplacement de contact (7, 8), deux parties (4, 5, 6) étant respectivement rotatives l'une par rapport à l'autre au niveau de leur emplacement de contact (7, 8) autour de l'axe de la direction d'écoulement (S1, S2) au niveau de l'emplacement de contact (7, 8), afin de modifier l'angle (α), et les deux emplacements de contact (7, 8) étant espacés l'un de l'autre dans la direction d'écoulement,
**caractérisé en ce que**
une conduite de circulation (10) est agencée dans la trajectoire d'écoulement pour l'eau, les parties (4, 5, 6) étant configurées de telle sorte qu'elles présentent dans une première position relative une allure essentiellement droite de la trajectoire de flux à travers l'intérieur du raccord de tuyau (1), et qu'elles forment dans une deuxième position relative un angle (α) différent de zéro entre les deux directions (R1, R2).

2. Conduite d'eau selon la revendication 1, **caractérisée en ce que** la partie (5) agencée entre deux parties (4, 6) génère une déviation de l'eau d'un premier angle partiel (β1), les deux parties (4, 6) adjacentes à cette partie (5) générant respectivement une déviation de l'eau d'un deuxième angle partiel (β2), qui est différent du premier angle partiel (β1).

3. Conduite d'eau selon la revendication 2, **caractérisée en ce que** le premier angle partiel (β1) est compris entre 40° et 50°, de préférence 45°.

4. Conduite d'eau selon la revendication 2 ou 3, **caractérisée en ce que** le deuxième angle partiel (β2) est compris entre 20° et 25°, de préférence 22,5°.

5. Conduite d'eau selon l'une quelconque des revendications 2 à 4, **caractérisée en ce que** les deux parties (4, 6) agencées dans la zone d'extrémité axiale du raccord de tuyau (1) sont configurées de manière identique.

6. Conduite d'eau selon l'une quelconque des revendications 1 à 5, **caractérisée en ce que** deux parties (4, 5, 6) juxtaposées au niveau d'un emplacement de contact (7, 8) sont reliées l'une à l'autre par des moyens de liaison par accouplement de forme (9).

7. Conduite d'eau selon l'une quelconque des revendications 1 à 5, **caractérisée en ce que** deux parties (4, 5, 6) juxtaposées au niveau d'un emplacement de contact (7, 8) sont reliées l'une à l'autre par des moyens de liaison par accouplement de force.

8. Conduite d'eau selon l'une quelconque des revendications 1 à 7, **caractérisée en ce que** la section de la partie (4, 6) située dans la zone d'extrémité axiale du raccord de tuyau (1) est configurée pour la liaison avec un tuyau composite ou pour le raccord d'un tuyau au moyen d'une liaison par vissage.
